(19) **Europäisches Patentamt / European Patent Office / Office européen des brevets**

(11) **EP 3 702 861 A1**

(12) **EUROPEAN PATENT APPLICATION**
published in accordance with Art. 153(4) EPC

(43) Date of publication:
**02.09.2020 Bulletin 2020/36**

(21) Application number: **18870720.2**

(22) Date of filing: **23.08.2018**

(51) Int Cl.:
***G05B 23/02*** (2006.01)

(86) International application number:
**PCT/JP2018/031088**

(87) International publication number:
**WO 2019/082491 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2017  JP 2017205721**

(71) Applicant: **Hitachi, Ltd.**
**Tokyo 100-8280 (JP)**

(72) Inventors:
• **SEKIAI, Takaaki**
  **Tokyo 100-8280 (JP)**
• **TANNO, Mitsuhiro**
  **Tokyo 100-8280 (JP)**
• **KUROHA, Yoshiyuki**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **PLANT OPERATION ASSISTANCE DEVICE AND OPERATION ASSISTANCE METHOD**

(57)    A plant is stopped at an early stage when an abnormal event occurs to avoid an increase in damage cost due to the abnormality propagation. An operation assistance device 200 includes a diagnosis unit 500 which diagnoses an operation state of a plant 100 based on operation data 3, an abnormality propagation prediction unit 600 which predicts equipment to which an abnormality spreads and time on the basis of a physical model based on a diagnosis result obtained by the diagnosis unit 500, a cost calculation unit 700 which predicts a temporal change of a damage cost on the basis of a result of the abnormality propagation prediction unit 600, and a plant stop determination unit 800 which generates a signal to stop the plant 100 in a case where the damage cost is equal to or greater than a damage cost due to a predetermined emergency stop of the plant 100.

**FIG. 1**

## Description

Technical Field

The present invention relates to an operation assistance device and an operation assistance method of a plant, and more particularly to an operation assistance device and an operation assistance method of a plant for avoiding an increase in damage cost.

Background Art

In recent years, with the technological innovation of Information and Communication Technology (ICT) and Internet of Thing (IoT), an environment where high-speed computers, network communication, and large-capacity data storage devices can be used is being prepared. The use of accumulated data attracts attention in many industrial fields. Even in the field of power generation business, it is necessary to formulate more efficient management policies by integrating data collected at local sites, such as measurement data and inspection/maintenance data of a power plant, with systems for managing corporate management and asset information. In the power generation business, the importance of thermal power plants as a backup power source is growing due to concerns that fluctuations in power generation due to increased use of renewable energy such as wind power and solar power would reduce the stability of the power system. In addition, as a result of the decrease in the ratio of nuclear power generation in Japan since the Great East Japan Earthquake, thermal power plants actually play a role not only as conventional load regulation but also as base load power supply. Therefore, thermal power plants are required to operate in consideration of key performance indicators (KPIs) such as operating rate, environmental performance, and efficiency.

In order to improve the KPI of the thermal power plant, many devices and methods for detecting an abnormal sign before an abnormal state occurs in a diagnosis target have been studied. PTL 1 discloses a diagnostic device using an adaptive resonance theory (ART). Herein, the ART is a theory that classifies multidimensional temporal data into clusters according to their similarity.

In the technique of PLT 1, first, normal operation data is classified into a plurality of clusters (normal clusters) using the ART. Next, the current operation data is input to the ART and classified into clusters. When the temporal data cannot be classified into a normal cluster, a new cluster is generated. The occurrence of a new cluster means that the state of the diagnosis target has changed to a new state. Therefore, in the diagnostic device of PTL 1, the occurrence of an abnormal sign is determined on the basis of the occurrence of a new cluster.

In addition, PTL 2 discloses a technology for predicting a risk cost due to breakage, performance degradation, and breakdown of equipment of a plant, selecting an optimal operation method while comparing the gain with operation, and issuing an instruction.

Citation List

Patent Literature

PTL 1: JP 2010-237893 A

PTL 2: JP 2004-094631 A

PTL 3: JP 2015-7509 A

Summary of Invention

Technical Problem

With the use of the technology of PTL 1, it is possible to detect the occurrence of an abnormal sign in a plant. In a case where an abnormal sign is detected, the plant operator continues to operate the plant to analyze and confirm the cause. However, additional time may be required for performing the cause analysis and confirmation of an abnormal event.

In addition, the technique of PTL 2 uses a probability model of the occurrence of an abnormal event and an abnormality propagation in prediction of the risk cost. In order to construct such a probability model, it is necessary to collect cases of abnormal events that have occurred in the past.

Therefore, an object of the invention is to stop the plant at an early stage when an abnormal event occurs in order to avoid an increase in damage cost due to the abnormality propagation.

Solution to Problem

In order to achieve the above object, an operation assistance device according to the invention includes a diagnosis unit which diagnoses an operation state of a plant based on operation data, an abnormality propagation prediction unit which predicts equipment to which an abnormal event spreads and time on the basis of a physical model based on a diagnosis result obtained by the diagnosis unit, a cost calculation unit which predicts a temporal change of a damage cost on the basis of a result of the abnormality propagation prediction unit, and a plant stop determination unit which generates a signal to stop the plant in a case where the damage cost is equal to or greater than a damage cost due to a predetermined emergency stop of the plant.

Advantageous Effects of Invention

According to the invention, a plant is stopped at an early stage when an abnormal event occurs to avoid an increase in damage cost due to an abnormality propagation.

Brief Description of Drawings

[FIG. 1] FIG. 1 is a block diagram illustrating an operation assistance device according to an embodiment of the invention.
[FIG. 2] FIG. 2 is a flowchart for describing the operation of the operation assistance device of the invention.
[FIG. 3] FIG. 3 is a diagram for describing an aspect of data stored in a database mounted on the operation assistance device of the invention.
[FIG. 4] FIG. 4 is a diagram for describing an aspect of data stored in the database mounted on the operation assistance device of the invention.
[FIG. 5] FIG. 5 is a diagram for describing a block diagram in a case where an adaptive resonance theory (ART) is used as an embodiment of a clustering unit of the invention.
[FIG. 6] FIG. 6 is a diagram for describing a classification result of data in the clustering unit of the invention.
[FIG. 7] FIG. 7 is a flowchart for describing an operation of a plant stop determination according to the invention.
[FIG. 8] FIG. 8 is a diagram for describing an example of calculation results of temporal changes in cost and damage degree for each scenario according to the invention.
[FIG. 9] FIG. 9 is a diagram illustrating an embodiment of a screen displayed on an image display device of the invention.
[FIG. 10] FIG. 10 is a block diagram for describing a configuration in a case where a target to which the operation assistance device of the invention is applied is a coal fired boiler.

Description of Embodiments

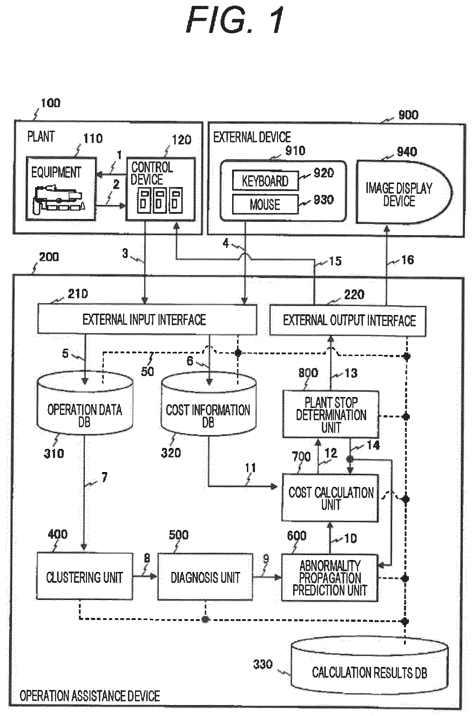

FIG. 1 is a block diagram illustrating an operation assistance device 200 according to an embodiment of the invention. In this embodiment, the operation assistance device 200 is connected to a plant 100 (an operation assistance target) and an external device 900. The plant 100 includes equipment 110 and a control device 120. The control device 120 receives a measurement signal 2 transmitted from the equipment 110, and transmits a control signal 1.
The operation assistance device 200 includes a clustering unit 400, a diagnosis unit 500, an abnormality propagation prediction unit 600, a cost calculation unit 700, and a plant stop determination unit 800 as an arithmetic device.
The operation assistance device 200 includes an operation data database 310, a cost information database 320, and a calculation results database 330 as databases. The calculation results database 330 stores the result calculated by the arithmetic device of the operation assistance device 200. Further, in FIG. 1, the database is abbreviated as DB. Computerized information is stored in the database, and the information is usually stored in a form called an electronic file (electronic data).
The operation device 200 includes an external input interface 210 and an external output interface 220 as interfaces with the outside. Then, operation data 3 collected by the plant 100 via the external input interface 210, and the external input signal 4 generated by operating an external input device 910 (a keyboard 910 and a mouse 920) provided in the external device 900 are acquired by the operation assistance device 200.
The operation data 3 acquired by the operation assistance device 200 is stored in the operation data database 310 via the external input interface. The cost information 6 included in the external input signal 4 is stored in the cost information database 320. In addition, it outputs image display information 16 to a screen display device 940, and a plant stop signal 15 to the control device 120 via the external output interface 220.

The clustering unit 400 classifies the operation data stored in the operation data database 310 into clusters according to the similarity. The clustering unit 400 incorporates a technique using an adaptive resonance theory disclosed in PTL 1. Further, the clustering technology 400 is not limited to the units described in this embodiment, and may be configured by mounting another clustering technology. The clustering result 8 is transmitted to a cause estimation unit 500.

The diagnosis unit 500 diagnoses the operation state of the plant 100 on the basis of the clustering result 8. As disclosed in PTL 1, the diagnosis unit 500 first classifies normal operation data into a plurality of clusters (normal clusters). Next, the current operation data is classified into a cluster. When the temporal data cannot be classified into a normal cluster, a new cluster is generated. The occurrence of a new cluster means that the state of the diagnosis target has changed to a new state. Therefore, the occurrence of an abnormal sign is determined on the basis of the occurrence of a new cluster.

In a case where the occurrence of an abnormal sign is detected, the diagnosis unit 500 estimates an abnormal cause. As disclosed in PTL 1, the diagnosis unit 500 estimates an event associated with a cluster number as an abnormal cause. Further, the diagnosis unit 500 is not limited to the unit described in this embodiment, and may be configured by mounting another abnormality cause estimating technique. The cause estimation result 9 is transmitted to the abnormality propagation prediction unit 600.

The abnormality propagation prediction unit 600 analyzes and predicts a state, which the abnormal event spreads, using a physical model on the basis of the cause estimation result 9. Herein, the physical model is a model constructed on the basis of physical equations such as the law of conservation of mass and the law of conservation of momentum. In addition, the abnormality propagation prediction unit 600 calculates a temporal change of the damage degree for each scenario, using the cause estimation result 9 and the scenario information 14 generated by the plant stop determination unit 800. An abnormality propagation prediction result 10 is transmitted to the cost calculation unit 700.

The cost calculation unit 700 calculates a loss cost using the abnormality propagation prediction result 10 and the cost information 11. In addition, the cost calculation unit 700 calculates the loss cost for each scenario using the abnormality propagation prediction result 10, the cost information 11, and the scenario information 14 generated by the plant stop determination unit 800. The cost calculation unit 700 calculates cost information by adding a cost required for replacement of a component whose the abnormality propagation degree exceeds a threshold value. A cost calculation result 12 is transmitted to the plant stop determination unit 800.

The plant stop determination unit 800 calculates whether to stop the plant 100 on the basis of the cost calculation result 12.

The plant stop determination result 13 is transmitted to the external output interface 220. In a case where the determination result is that the plant is to be stopped, the plant stop signal 15 is transmitted to the control device 120.

Further, in the operation assistance device 200 of this embodiment, the arithmetic device and the databases are provided inside the operation assistance device 200, but some of these devices may be arranged outside the operation assistance device 200, and only the data may be communicated between the devices. In addition, a signal database information 50, which is a signal stored in each database, can display all the information on the screen display device 940 via the external output interface 220, and these information can be modified by the external input signal 2 generated by operating the external input device 910. In this embodiment, the external input device 910 is configured by the keyboard 920 and the mouse 930, but any device for inputting data, such as a microphone for inputting voice, a touch panel, or the like may be used.

In addition, it is a matter of course that the embodiment of the invention can be implemented as a device for analyzing operation data offline. In addition, in this embodiment, the operation assistance device 200 is applied to a plant, but it is a matter of course that the operation assistance device 200 can be applied to equipment other than the plant.

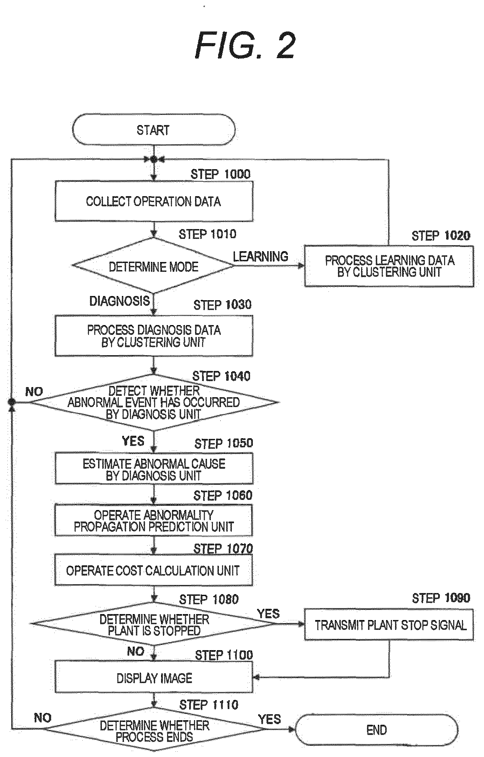

FIG. 2 is a flowchart for describing the operation of the operation assistance device 200.

In Step 1000, the operation data 3 is acquired from the control device 120, and stored in the operation data database 310.

In Step 1010, it is determined whether the operation mode is a learning mode or a diagnosis mode. In a case where the mode is the learning mode, the process proceeds to Step 1020. In a case where the mode is the diagnosis mode, the process proceeds to Step 1030. The learning mode operates when the number of repetitions of this flowchart is one (first time), and the diagnosis mode operates after the second time.

In Step 1020, learning data is processed by the clustering unit 400 to generate a cluster in a normal state. Thereafter, the process returns to Step 1000.

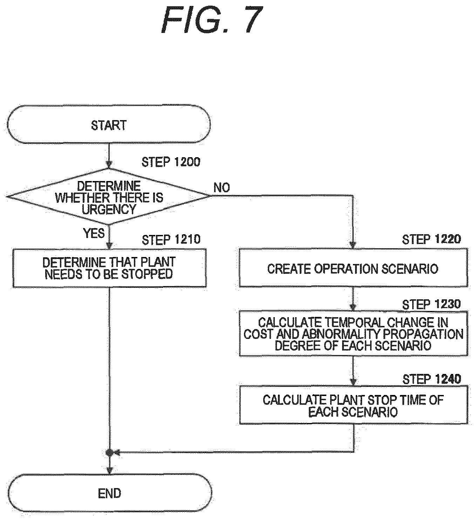

In Step 1030, the clustering unit 400 processes diagnosis data. In Step 1040, it is determined whether an abnormal event has occurred in the plant 100 on the basis of the clustering result 8. In a case where an abnormal event is detected, the process proceeds to Step 1050, and in a case where no abnormality is detected, the process returns to Step 1000. In Step 1050, the diagnosis unit 500 estimates the abnormality cause. In Step 1060, the abnormality propagation prediction unit 600 predicts the component to which the abnormal event spreads and the time using the physical model. In Step 1070, the cost calculation unit 700 is operated to calculate the cost associated with the abnormal event and the abnormality propagation. In Step 1080, the determination of the plant stop is performed. The content of Step 1080 will be described later using FIG. 7. In Step 1090, the plant stop signal 15 is transmitted to the control device 120. In Step 1100, the image display information 16 is transmitted to an image display device 940. In Step 1110, in a case where there is a stop instruction from an operator, the process proceeds to the end. In a case where there is no instruction, the process returns to Step 1000.

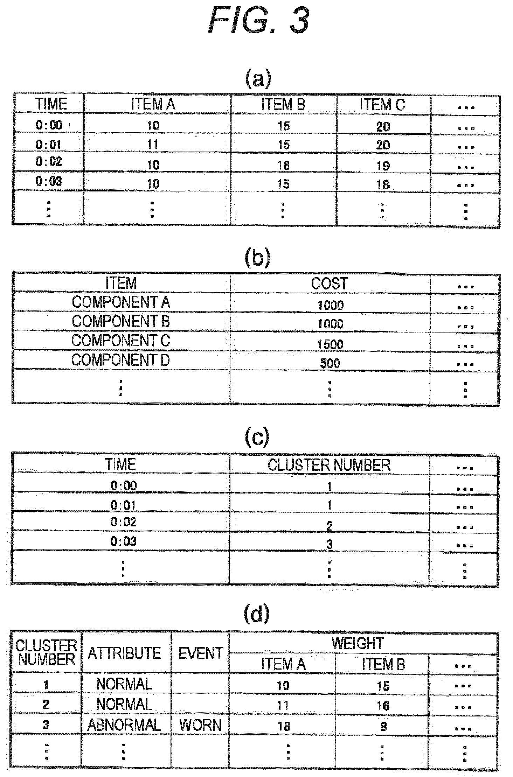

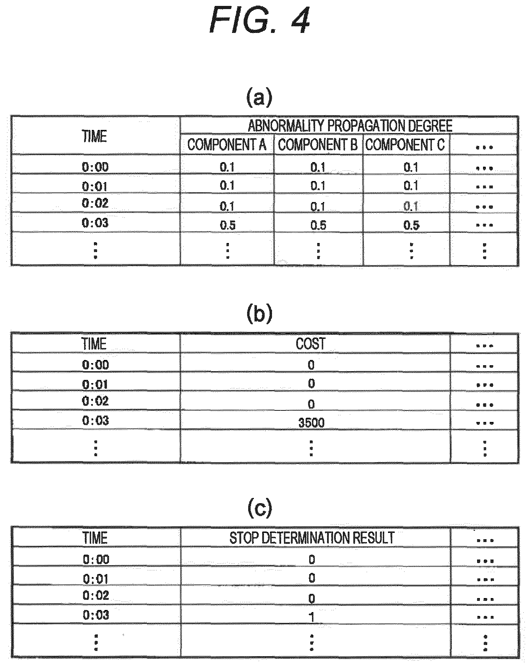

FIGS. 3 and 4 are diagrams for describing modes of data stored in a database mounted on the operation assistance device 200.

FIG. 3(a) is a diagram for describing an aspect of data stored in the operation data database 310. As illustrated in FIG. 3(a), the operation data measured by the sensor is stored for each sampling cycle.

FIG. 3(b) is a diagram for describing an aspect of data stored in the cost information database 320. As illustrated in FIG. 3(b), for example, cost information required for component replacement is stored as cost information relating to the abnormal event and the loss accompanying the abnormality propagation.

FIGS. 3(c) and 3(d) and FIGS. 4(a), 4(b), and 4(c) are diagrams for describing modes of data stored in the calculation results database 330.

FIGS. 3(c) and 3(d) are data obtained by operating the clustering unit 400, and include a relation between time and a cluster number (FIG. 3(c)), an attribute for each cluster, and a weight for each cluster. Herein, the attribute is information for defining whether each cluster is a normal cluster or an abnormal cluster. In addition, the weight is coefficient information for defining the center coordinates of each cluster.

Further, for a cluster having an abnormal attribute, an abnormal event defined for each cluster is stored. Further, the diagnosis unit 500 collates the cluster number at each time illustrated in FIG. 3(c) with the event name defined in FIG. 3(d), and estimates an abnormal event.

FIG. 4(a) illustrates a relation between the abnormality propagation degree and the time for each component obtained by operating the abnormality propagation prediction unit 600. Herein, the abnormality propagation degree refers to, for example, a width of reduction in thickness of a pipe, and is a numerical value of the degree of damage received due to an abnormal event for each component.

FIG. 4(b) illustrates a relation between cost information obtained by operating the cost calculation unit 700 and time. A value obtained by adding the cost required for replacement of a component whose the abnormality propagation degree exceeds the threshold value is stored as cost information.

FIG. 4(c) illustrates a relation between a stop determination result obtained by operating the plant stop determination unit 800 and time. "0" means that the operation has been continued, and "1" means that the operation has been stopped.

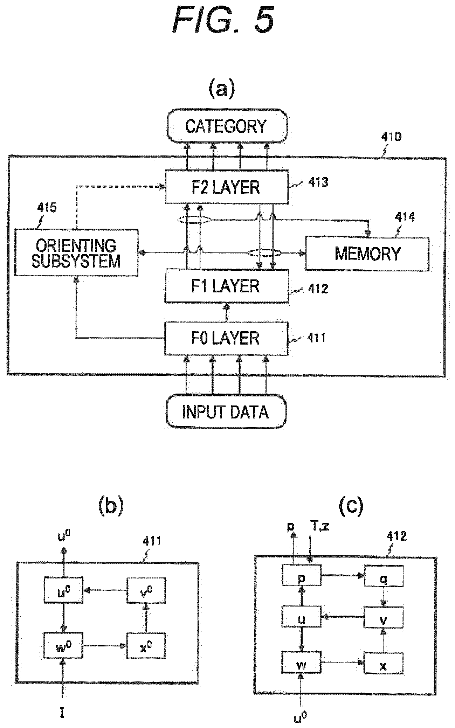

FIG. 5 is a diagram for describing a block diagram in a case where the adaptive resonance theory (ART) is used as an example of the clustering unit 400. In the following description, cluster and cluster have the same meaning.

The ART includes data $Nxi(n)$ normalized to a range of 0 to 1 on the basis of a normalization range in which the operation data and raw material information data are set, and data containing the complement $CNxi(n)$ ($= 1 - Nxi(n)$) of the normalized data is input as input data $Ii(n)$.

An ART module 410 includes an F0 layer 411, an F1 layer 412, an F2 layer 413, a memory 414, and an orienting subsystem 415, which are interconnected. The F1 layer 412 and the F2 layer 413 are connected via a weight. The weight represents a prototype (original) of a cluster into which the input data is classified. Herein, the prototype represents a representative value of the cluster.

Next, the algorithm of the ART 410 will be described.

The outline of the algorithm when input data is input to the ART 410 is as illustrated in the following Process 1 to Process 5.

Process 1: An input vector is normalized by the F0 layer 411 to remove noise.

Process 2: A suitable cluster candidate is selected by comparing the input data input to the F1 layer 412 with the weight.

Process 3: The validity of the cluster selected by the orienting subsystem 415 is evaluated on the basis of the ratio with the parameter $\rho$. If it is determined that the cluster is valid, the input data is classified into that cluster, and the process proceeds to Process 4. On the other hand, if it is not determined that the cluster is valid, the cluster is reset, and a suitable cluster candidate is selected from other clusters (repeat Process 2). When the value of the parameter $\rho$ is increased, the classification of clusters becomes finer. In other words, the cluster size is reduced. Conversely, the smaller the value of p, the coarser the classification. The cluster size increases. This parameter $\rho$ is called a vigilance parameter.

Process 4: When all the existing clusters are reset in Process 2, it is determined that the input data belongs to the new cluster, and a new weight representing the prototype of the new cluster is generated.

Process 5: When the input data is classified into a cluster J, the weight $WJ(new)$ corresponding to the cluster J is updated by Equation 1 using the past weight WJ(old) and the input data p (or data derived from the input data).

[Equation 1]

$$WJ(new) = Kw \cdot p + (1 - Kw) \cdot WJ(old)$$

Herein, Kw is a learning rate parameter (0 < Kw < 1), and is a value that determines a degree to which the input vector is reflected on the new weight.

Further, the arithmetic expressions of Equation 1 and Equation 2 to 12 described later are incorporated in the ART 410.

The feature of the data classification algorithm of the ART 410 lies in the above Process 4.

In Process 4, in a case where input data different from the pattern at the time of learning is input, a new pattern can be recorded without changing the recorded pattern. Therefore, it is possible to record a new pattern while recording a pattern learned in the past.

In this way, when the operation data given in advance as the input data is given, the ART 410 learns the given pattern. Therefore, when new input data is input to the learned ART 410, it is possible to determine which pattern in the past is close by the above algorithm. In addition, if the pattern has not been experienced in the past, it is classified as a new cluster.

FIG. 5(b) is a block diagram illustrating a configuration of the F0 layer 411. In the F0 layer 411, the input data $I_i$ is normalized again at each time, and a normalized input vector $u_i^0$ to be input to the F1 layer 412 and the orienting subsystem 415 is created.

First, $W_i^0$ is calculated from the input data Ii according to Equation 2. Herein, a is a constant.

[Equation 2]

$$w_i^0 = I_i + a u_i^0$$

Next, $X_i^0$ obtained by normalizing $W_i^0$ is calculated using Equation 3. Herein, $\|W^0\|$ represents the norm of $W^0$.

[Equation 3]

$$x_i^0 = \frac{w_i^0}{\left\| w^0 \right\|}$$

Then, $V_i^0$ obtained by removing noise from $X_i^0$ is calculated using Equation 4. Herein, $\theta$ is a constant for removing noise. Since a minute value becomes 0 by the calculation of Equation 4, noise of the input data is removed.

[Equation 4]

$$v_i^0 = f(x_i^0) = \begin{cases} x_i^0 & if \quad x_i^0 \geq \theta \\ 0 & otherwise \end{cases}$$

Finally, the normalized input vector $u_i^0$ is obtained using Equation 5. $u_i^0$ is the input of the F1 layer.

[Equation 5]

$$u_i^0 = \frac{v_i^0}{\|v^0\|}$$

FIG. 5(c) is a block diagram illustrating a configuration of the F1 layer 412. In the F1 layer 412, $u_i^0$ obtained by Equation 5 as short-term memory is held, and Pi to be input to the F2 layer 413 is calculated. Equations 6 to 12 collectively represent the equations for the F2 layer. Herein, a and b are constants, f(·) is a function in Equation 4, and $T_j$ is a fitness calculated by the F2 layer 413.

[Equation 6]

$$w_i = u_i^0 + a u_i$$

[Equation 7]

$$x_i = \frac{w_i}{\|w\|}$$

[Equation 8]

$$v_i = f(x_i) + b f(q_i)$$

[Equation 9]

$$u_i = \frac{v_i}{\|v\|}$$

[Equation 10]

$$q_i = \frac{p_i}{\|p\|}$$

[Equation 11]

$$p_i = u_i + \sum_i^M g(y_i) z_{ji}$$

However,

[Equation 12]

$$g(y_i) = \begin{cases} d & if \quad T_j = \max(T_j) \\ 0 & otherwise \end{cases}$$

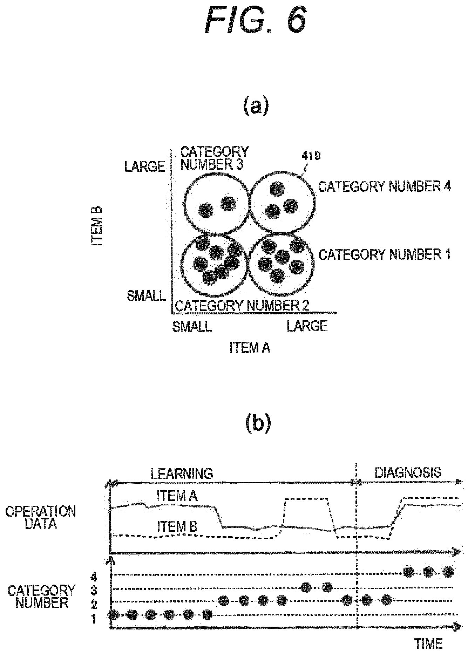

FIG. 6 is a diagram for describing a classification result of data in the clustering unit 400.

FIG. 6(a) is a diagram illustrating an example of a classification result obtained by classifying the operation data into clusters.

FIG. 6(a) illustrates two items of the operation data as an example, and is represented by a two-dimensional graph. In addition, the vertical axis and the horizontal axis represent the operation data of each item in a standardized manner.

The operation data is divided into a plurality of clusters 419 (circles illustrated in FIG. 4(a)) by the ART module 410. One circle corresponds to one cluster.

In this embodiment, the operation data is classified into four clusters. Cluster number 1 represents a group where the value of Item A is large and the value of Item B is small, Cluster number 2 represents a group where both the values of Item A and Item B are small, and Cluster number 3 represents a group where the value of Item A is small and the value of Item B is large, and Cluster number 4 represents a group in which the values of Items A and B are both large.

FIG. 6(b) is a diagram for describing a result of classifying the operation data into clusters and an example of the operation data. The horizontal axis represents time, and the vertical axis represents measurement signals and cluster numbers.

As illustrated in FIG. 6(b), the operation data is classified into the clusters 1 to 4.

The cluster 4 is in a new state that has not been experienced during normal times, and the occurrence of an abnormal event is determined on the basis of the cluster number in Step 1140 of FIG. 2.

FIG. 7 is a flowchart for describing the operation of Step 1080 in FIG. 2. In this flowchart, the operation is performed using the cost calculation unit 700 and the plant stop determination unit 800.

In Step 1200, it is determined that there is urgency of stopping the plant.

The amount of loss due to the occurrence of the abnormal event and the abnormality propagation calculated in Step 1070 is compared with the amount of opportunity loss due to the stopping of the plant. In a case where the former value is high, the process proceeds to Step 1210. Otherwise, the process proceeds to Step 1220.

In Step 1210, it is determined that the plant 100 needs to be stopped, and the process proceeds to the end.

In Step 1220, an operation scenario is created by the plant stop determination unit 800. Herein, the operation scenario is a scenario assuming that the plant operation is continued after the abnormal event is detected, or the operation is stopped and repaired. In Step 1230, an operation scenario 14 created in Step 1220 is transmitted to the cost calculation unit 700 and the abnormality propagation prediction unit 600, and the temporal change in the cost and the abnormality propagation degree is calculated. In Step 1240, recommended time for stopping the plant is calculated for each scenario, and the process proceeds to the end.

In addition, when the plant is stopped, in a case where there are a plurality of modes for stopping the plant, an appropriate stop mode may be selected in accordance with the detected abnormal event so that the abnormality propagation is reduced.

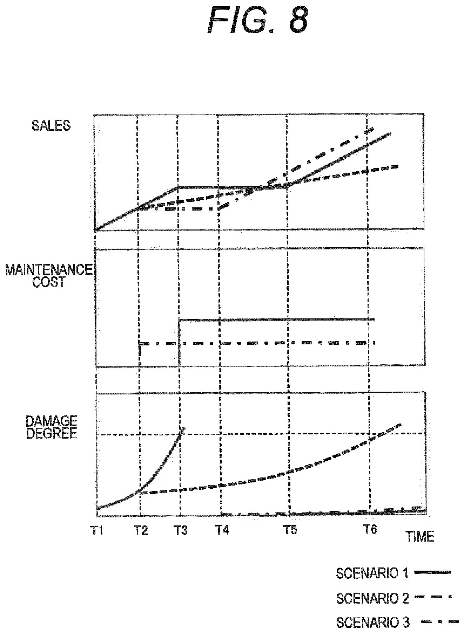

FIG. 8 is a diagram for describing an example of a calculation result of a temporal change in cost and damage degree for each scenario obtained by operating Step 1230 in FIG. 7.

In this plant, it is planned to detect an abnormal event at time T1 and to conduct a periodic inspection at time T6. In this embodiment, three types of scenarios 1 to 3 are compared.

Scenario 1 assumes a case where the operation of the plant is continued. In this case, the damage degree exceeds the threshold at time T3, and it is necessary to stop and repair the plant. Since the repair is performed from time T3 to time T5, sales do not increase.

Scenario 2 assumes a case where an operation load of the plant is reduced and the operation is continued. Although sales per unit time will decrease, the damage degree will be slower than in Scenario 1, and it will be possible to continue operation until regular inspection.

In Scenario 3, the plant is stopped at time T2 and repaired from time T2 to time T4. The repair period is shorter than Scenario 1. In Scenario 3, the sales amount at time T6 is the highest.

In this way, according to the invention, it is possible to determine the timing to stop the plant by comparing the temporal changes in sales, maintenance costs, and the damage degree for each scenario. In addition, the timing for automatically stopping the plant can be determined.

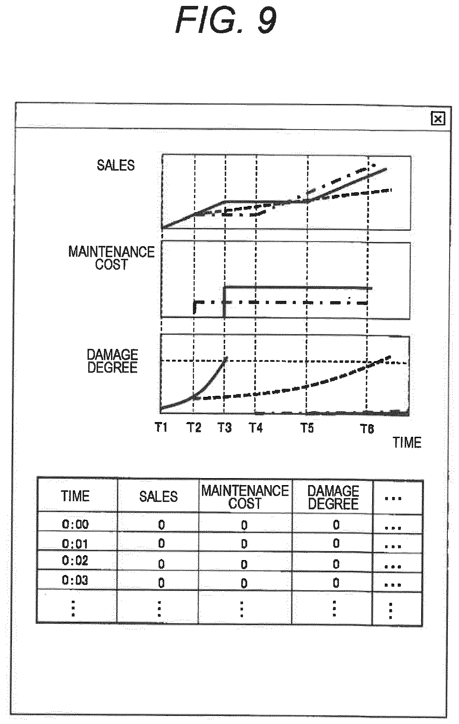

FIG. 9 is an example of a screen displayed on the image display device 940. The calculation results such as sales, maintenance costs, and the damage degree described in FIG. 8 can be displayed in any format such as a graph or a table. In this way, it is possible to provide the operator with the information on the diagnosis result, the abnormality propagation prediction result, and the cost.

As described above, with the use of the operation assistance device according to the invention, it is possible to stop the plant at an early stage when an abnormal event occurs, and avoid an increase in damage cost due to the abnormality propagation.

First Embodiment

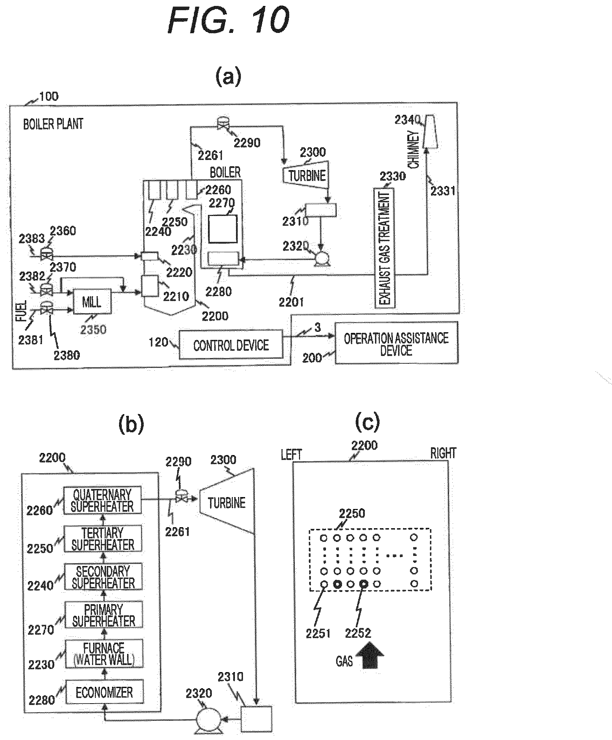

FIG. 10 is a block diagram for describing a configuration when the equipment 110 in the plant 100 to be applied is a coal fired boiler.

FIG. 10 is a diagram illustrating an embodiment of the plant 100.

This embodiment is a thermal power plant having a boiler 2200 and a steam turbine 2300 driven by steam generated by the boiler 2200 as a main component (a power generator is not illustrated). The plant 100 controls a designated load (power generation output) on the basis of a load request command. By adjusting the valve opening of a steam control valve 2290, a steam flow rate 2261 of steam guided to the turbine 2300 changes, and the power generation output changes.

In addition, a water/steam system includes a steam condenser 2310 that cools the steam from the steam turbine 2300 into a liquid, and a feedwater pump 2320 that pumps and sends the water cooled by the steam condenser 2310 to the boiler 2200 again as boiler feed water. In addition, while not illustrated, an actual plant also has a feedwater heater for preheating water for the boiler using a part of steam (a heating source) extracted from a middle stage of the steam turbine 2300.

On the other hand, the system of a combustion gas 2201 discharged from the boiler includes an exhaust gas treatment device 2330 for purifying exhaust gas, and a chimney 2340 for discharging the purified gas 2331.

Coal 2381 which is fuel is sent to a coal crusher (mill) 2350 via a fuel supply adjustment valve 2380. In addition, air 2382 used for coal conveyance and combustion adjustment is supplied to a coal crusher 2350 and a burner 2310 via an air amount adjustment valve 2370. The coal turned into powder (pulverized coal) by the coal crusher 2350 is conveyed by air and supplied to the burner 2210. An after-air port 2220 is arranged above the burner 2210, and air 2383 is supplied to the after-air port 2220 via an air amount adjustment valve 2360.

Next, the configuration of the boiler 2200 will be described.

Since a temperature inside a furnace having the burner 2210 for burning fuel becomes high, there is a cooling wall called a water wall 2230 for cooling the entire wall surface and recovering the heat of the combustion gas. Inside the boiler 2200, there is also a heat exchanger configured by an economizer 2280, a primary superheater 2270, a secondary superheater 2240, a tertiary superheater 2250, and a quaternary superheater 2260, and these components collect heat of the combustion gas to produce hot steam.

Further, while not illustrated in the drawing, the plant is provided with a number of sensors for measuring gas composition, temperature, pressure, steam temperature, pressure, a metal temperature of the heat exchanger, etc. The measurement results are transmitted from the data transmission device 2390 to the boiler tube leak detection device 2400 as measurement information 1. In addition, although not illustrated, a plurality of boiler burners 2210 are installed horizontally in the front and rear of the furnace and a plurality of stages in the height direction, and a plurality of after-air ports are generally arranged in the front and rear of the furnace in the horizontal direction.

As illustrated in FIG. 10(b), the boiler feedwater is first guided to the economizer 2290, and then increased in temperature while sequentially flowing in the water wall 2230, the primary superheater 2270, the secondary superheater 2240, the tertiary superheater 2250, and the quaternary superheater 2260, and flows into the steam turbine 2300 as main steam 2261. The steam that has worked in the high-pressure steam turbine 2300 becomes liquid in the steam condenser 2310 and is sent again to the boiler by the feedwater pump 2320.

FIG. 10(c) is a top view of the tertiary superheater 2250. A plurality of tubes 2251 forming the superheater are arranged in the width direction and the depth direction of the boiler. In addition, a metal temperature measuring device 2252 of the tube is attached to the superheater. Generally, the metal temperature measuring device are installed every few to several tens of them.

In this way, in a boiler plant, steam is generated by heating feedwater with a plurality of heat exchangers using high-temperature gas generated by combustion of coal. The heat exchangers come into contact with high-temperature, highly corrosive gases, which may damage metal materials due to creep, thermal fatigue, and corrosion. When the metal material is damaged, steam leaks from the damaged location. This event is called tube leak.

As a technique for detecting the occurrence of tube leak, a technique described in PTL 3 is disclosed.

The diagnosis unit 500 of this embodiment may be equipped with a technique for estimating a leak position from a change width in metal temperature as described in PTL 3 as a method of estimating an abnormality cause.

In addition, the clustering unit 400 divides the data into a plurality of groups, performs clustering processing for each group, and the plant stop determination unit 800 may determine to stop the plant in a case where the number of groups in which an abnormal event is detected is larger than a threshold.

As a physical model mounted on the abnormality propagation prediction unit 600, for example, a formula of Finnie and Bitter for calculating a wear amount as shown in Equation 13 is mounted.

[Equation 13]

$$W = W_c + W_d$$

Herein, W is a total wear amount, Wc is a cutting wear amount, and Wd is a deformation wear amount. Wc and Wd are calculated by Equations 14 and 15, respectively.

[Equation 14]

$$W_c = \begin{cases} \dfrac{\rho_t MCV^2}{P\Psi}\left[\sin 2\alpha - \dfrac{2(1+m_p r_p^2/I_p)}{K}\sin^2\alpha\right] & \because \tan\alpha \le \dfrac{K}{2(1+m_p r_p^2/I_p)} \\[2em] \dfrac{\rho_t MCV^2}{P\Psi}\left[\dfrac{K\cos^2\alpha}{2(1+m_p r_p^2/I_p)}\right] & \because \tan\alpha > \dfrac{K}{2(1+m_p r_p^2/I_p)} \end{cases}$$

[Equation 15]

$$W_d = \dfrac{\dfrac{1}{2}\rho_t M(V\sin\alpha - K')^2}{\varepsilon}$$

Herein, M is a total particle collision amount (kg), $\rho$ is a density, $\alpha$ is a particle collision angle, V is a particle collision velocity, mp is a particle mass, rp is a particle radius, Ip is a particle completion moment, K is a ratio of vertical force to horizontal force when particles collide, K' is a collision speed at which the stress generated on the wearable reaches the elastic limit, P is a vertical component of the maximum contact stress, $\Psi$ is a cutting wear constant, and $\varepsilon$ is an energy required to strip a unit volume of the worn item, C is an experimental constant, the subscript t is a worn item, and p is a particle.

By using this model, it becomes possible to predict the speed (mm/min) at which the leaked steam collides with the surrounding tubes and the tubes lose their thickness. The time at which the wall thickness of the tube becomes equal to or less than an operation limit value is output as a predicted leak propagation time.

In addition, it is also possible to calculate the temporal change of the thickness in the normal state using the present model, and set the thickness at the time of detecting an abnormal event.

As described above, with the use of the operation assistance device according to the invention, it is possible to stop the plant at an early stage when an abnormal event occurs, and avoid an increase in damage cost due to the abnormality propagation.

Reference Signs List

1    control signal
2    measurement signal
3    operation data

| | |
|---|---|
| 4 | external input information |
| 5 | operation data |
| 6 | cost information |
| 7 | operation data |
| 8 | clustering results |
| 9 | cause estimation result |
| 10 | abnormality propagation prediction result |
| 11 | cost information |
| 12 | loss cost calculation result |
| 13 | plant stop determination result |
| 14 | scenario information |
| 15 | plant stop signal |
| 16 | image display information |
| 50 | DB information |
| 100 | plant |
| 110 | equipment |
| 120 | control device |
| 200 | operation assistance device |
| 210 | external input interface |
| 220 | external output interface |
| 310 | operation data database |
| 320 | cost information database |
| 330 | calculation results database |
| 400 | clustering unit |
| 500 | diagnosis unit |
| 600 | abnormality propagation prediction unit |
| 700 | cost calculation unit |
| 800 | plant stop determination unit |
| 900 | external device |
| 910 | external input device |
| 920 | keyboard |
| 930 | mouse |
| 940 | image display device |

**Claims**

1.  An operation assistance device, comprising:

    a diagnosis unit which diagnoses an operation state of a plant based on operation data;
    an abnormality propagation prediction unit which predicts equipment to which an abnormal event spreads and time on the basis of a physical model based on a diagnosis result obtained by the diagnosis unit;
    a cost calculation unit which predicts a temporal change of a damage cost on the basis of a result of the abnormality propagation prediction unit; and
    a plant stop determination unit which generates a signal to stop the plant in a case where the damage cost is equal to or greater than a damage cost due to a predetermined emergency stop of the plant.

2.  The operation assistance device according to claim 1,
    wherein the operation data is a classification result of a clustering unit which classifies the operation data of the plant into clusters according to data similarity.

3.  The operation device according to claim 2,
    wherein the diagnosis unit diagnoses whether the operation state of the plant is normal or abnormal on the basis of the classification result, and estimates an abnormal cause in a case where the operation state is abnormal.

4.  The operation assistance device according to any one of claims 1 to 3,
    wherein the plant stop determination unit creates an operation scenario related to an operation of the plant in a case where the damage cost is less than the damage cost due to a predetermined emergency stop of the plant, and calculates a recommended time for stopping the plant for each operation scenario.

5. The operation assistance device according to claim 3 or 4,
wherein the physical model sets a boundary condition for analysis on the basis of the abnormal cause and is based on physical laws.

6. The operation assistance device according to any one of claims 1 to 5,
wherein the plant stop determination unit selects a stop mode of the plant in accordance with a detected abnormal event.

7. The operation assistance device according to any one of claims 1 to 6,
wherein, when a result of the abnormality propagation prediction unit of the equipment exceeds a predetermined value, the cost calculation unit calculates a cost by adding a cost required for replacement of the equipment.

8. The operation assistance device according to any one of claims 1 to 7,
wherein a screen display unit is connected to display the diagnosis result, the abnormality propagation prediction result, and the damage cost.

9. The operation assistance device according to any one of claims 1 to 8,
wherein the equipment is a boiler, and the abnormal event is that steam leaked by a boiler tube leak collides with a surrounding tube and thus causes damage.

10. An operation assistance method, comprising:

a diagnosis unit which diagnoses an operation state of a plant based on operation data;
an abnormality propagation prediction unit which predicts equipment to which an abnormality spreads and time on the basis of a physical model based on a diagnosis result obtained by the diagnosing;
a cost calculation unit which predicts a temporal change of a damage cost on the basis of a result of the abnormality propagation prediction unit; and
a plant stop determination unit which generates a signal to stop the plant in a case where the damage cost is equal to or greater than a damage cost due to a predetermined emergency stop of the plant.

# FIG. 1

# FIG. 2

```
                    ┌──────────────────────┐
                    │        START         │
                    └──────────────────────┘
                               │
                               │ STEP 1000
                    ┌──────────────────────┐
                    │ COLLECT OPERATION DATA│
                    └──────────────────────┘
                               │
                               │ STEP 1010
                         ╱──────────╲        LEARNING      STEP 1020
                        ╱  DETERMINE  ╲───────────────┐ ┌──────────────────────┐
                        ╲    MODE     ╱               └─│ PROCESS LEARNING DATA │
                         ╲──────────╱                   │  BY CLUSTERING UNIT   │
                    DIAGNOSIS │   STEP 1030             └──────────────────────┘
                    ┌──────────────────────┐
                    │ PROCESS DIAGNOSIS DATA│
                    │  BY CLUSTERING UNIT   │
                    └──────────────────────┘
                               │
                               │ STEP 1040
                         ╱──────────────╲
          NO            ╱ DETECT WHETHER  ╲
         ◄─────────────╱ ABNORMAL EVENT HAS╲
                       ╲ OCCURRED BY        ╱
                        ╲ DIAGNOSIS UNIT   ╱
                         ╲──────────────╱
                       YES │   STEP 1050
                    ┌──────────────────────┐
                    │ ESTIMATE ABNORMAL CAUSE│
                    │   BY DIAGNOSIS UNIT   │
                    └──────────────────────┘
                               │ STEP 1060
                    ┌──────────────────────┐
                    │  OPERATE ABNORMALITY  │
                    │PROPAGATION PREDICTION UNIT│
                    └──────────────────────┘
                               │ STEP 1070
                    ┌──────────────────────┐
                    │OPERATE COST CALCULATION UNIT│
                    └──────────────────────┘
                               │
                               │ STEP 1080               STEP 1090
                         ╱──────────────╲   YES  ┌──────────────────────┐
                        ╱ DETERMINE WHETHER╲─────│TRANSMIT PLANT STOP SIGNAL│
                        ╲ PLANT IS STOPPED ╱     └──────────────────────┘
                         ╲──────────────╱
                        NO │   STEP 1100
                    ┌──────────────────────┐
                    │     DISPLAY IMAGE     │◄───────────
                    └──────────────────────┘
                               │ STEP 1110
          NO             ╱──────────────╲   YES   ┌──────────────┐
         ◄──────────────╱ DETERMINE WHETHER╲──────│     END      │
                        ╲  PROCESS ENDS    ╱      └──────────────┘
                         ╲──────────────╱
```

14

# FIG. 3

## (a)

| TIME | ITEM A | ITEM B | ITEM C | ... |
|---|---|---|---|---|
| 0:00 | 10 | 15 | 20 | ... |
| 0:01 | 11 | 15 | 20 | ... |
| 0:02 | 10 | 16 | 19 | ... |
| 0:03 | 10 | 15 | 18 | ... |
| ⋮ | ⋮ | ⋮ | ⋮ | ⋮ |

## (b)

| ITEM | COST | ... |
|---|---|---|
| COMPONENT A | 1000 | ... |
| COMPONENT B | 1000 | ... |
| COMPONENT C | 1500 | ... |
| COMPONENT D | 500 | ... |
| ⋮ | ⋮ | ⋮ |

## (c)

| TIME | CLUSTER NUMBER | ... |
|---|---|---|
| 0:00 | 1 | ... |
| 0:01 | 1 | ... |
| 0:02 | 2 | ... |
| 0:03 | 3 | ... |
| ⋮ | ⋮ | ⋮ |

## (d)

| CLUSTER NUMBER | ATTRIBUTE | EVENT | WEIGHT | | |
|---|---|---|---|---|---|
| | | | ITEM A | ITEM B | ... |
| 1 | NORMAL | | 10 | 15 | ... |
| 2 | NORMAL | | 11 | 16 | ... |
| 3 | ABNORMAL | WORN | 18 | 8 | ... |
| ⋮ | ⋮ | | ⋮ | ⋮ | ⋮ |

# FIG. 4

## (a)

| TIME | ABNORMALITY PROPAGATION DEGREE | | | |
|---|---|---|---|---|
| | COMPONENT A | COMPONENT B | COMPONENT C | ... |
| 0:00 | 0.1 | 0.1 | 0.1 | ... |
| 0:01 | 0.1 | 0.1 | 0.1 | ... |
| 0:02 | 0.1 | 0.1 | 0.1 | ... |
| 0:03 | 0.5 | 0.5 | 0.5 | ... |
| ⋮ | ⋮ | ⋮ | ⋮ | ⋮ |

## (b)

| TIME | COST | ... |
|---|---|---|
| 0:00 | 0 | ... |
| 0:01 | 0 | ... |
| 0:02 | 0 | ... |
| 0:03 | 3500 | ... |
| ⋮ | ⋮ | ⋮ |

## (c)

| TIME | STOP DETERMINATION RESULT | ... |
|---|---|---|
| 0:00 | 0 | ... |
| 0:01 | 0 | ... |
| 0:02 | 0 | ... |
| 0:03 | 1 | ... |
| ⋮ | ⋮ | ⋮ |

# FIG. 5

## (a)

CATEGORY

410

F2 LAYER — 413

415

ORIENTING SUBSYSTEM

414

MEMORY

F1 LAYER — 412

F0 LAYER — 411

INPUT DATA

## (b)

$u^0$

411

| $u^0$ | ← | $v^0$ |

| $w^0$ | → | $x^0$ |

$I$

## (c)

$p$     $T, z$

412

| $p$ | → | $q$ |

| $u$ | ← | $v$ |

| $w$ | → | $x$ |

$u^0$

# FIG. 6

## (a)

## (b)

EP 3 702 861 A1

# FIG. 7

START

STEP 1200

DETERMINE WHETHER THERE IS URGENCY

NO

YES

STEP 1210

DETERMINE THAT PLANT NEEDS TO BE STOPPED

STEP 1220

CREATE OPERATION SCENARIO

STEP 1230

CALCULATE TEMPORAL CHANGE IN COST AND ABNORMALITY PROPAGATION DEGREE OF EACH SCENARIO

STEP 1240

CALCULATE PLANT STOP TIME OF EACH SCENARIO

END

# FIG. 8

# FIG. 9

| TIME | SALES | MAINTENANCE COST | DAMAGE DEGREE | ... |
|------|-------|------------------|--------------|-----|
| 0:00 | 0 | 0 | 0 | ... |
| 0:01 | 0 | 0 | 0 | ... |
| 0:02 | 0 | 0 | 0 | ... |
| 0:03 | 0 | 0 | 0 | ... |
| : | : | : | : | : |

# FIG. 10

## (a)

## (b)

## (c)

## INTERNATIONAL SEARCH REPORT

| International application No. |
| --- |
| PCT/JP2018/031088 |

A. CLASSIFICATION OF SUBJECT MATTER
Int.Cl. G05B23/02(2006.01)i

According to International Patent Classification (IPC) or to both national classification and IPC

B. FIELDS SEARCHED

Minimum documentation searched (classification system followed by classification symbols)
Int.Cl. G05B23/02

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 8-313685 A (TOSHIBA CORPORATION) 29 November 1996, paragraphs [0022]-[0029], fig. 1, 2 (Family: none) | 1-10 |
| A | WO 2009/144780 A1 (FUJITSU LIMITED) 03 December 2009, paragraphs [0011]-[0039], fig. 1-27 & US 2011/0093310 A1, paragraphs [0051]-[0106], fig. 1-26 & GB 2473970 A | 1-10 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12.10.2018 | 23.10.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2018/031088

C (Continuation). DOCUMENTS CONSIDERED TO BE RELEVANT

| Category* | Citation of document, with indication, where appropriate, of the relevant passages | Relevant to claim No. |
|---|---|---|
| A | JP 59-214915 A (HITACHI, LTD.) 04 December 1984, page 3, upper left column, line 11 to lower right column, line 1, fig. 4, 5 (Family: none) | 1-10 |
| A | JP 2017-162327 A (TLV CO., LTD.) 14 September 2017, paragraphs [0017]-[0057], fig. 1-9 (Family: none) | 1-10 |

Form PCT/ISA/210 (continuation of second sheet) (January 2015)

**REFERENCES CITED IN THE DESCRIPTION**

**Patent documents cited in the description**

- JP 2010237893 A
- JP 2004094631 A
- JP 2015007509 A